# EUROPEAN PATENT APPLICATION

(11) **EP 4 672 166 A1**
(43) Date of publication of application: **31.12.2025**
(21) Application number: 25181283.0
(22) Date of filing: 06.06.2025
(51) Int. Cl.: G06V 10/25, G06V 10/62, G06V 20/40, G06V 20/58, G06V 40/20

(54) **DOOR CONTROL DEVICE AND STORAGE MEDIUM**

(30) Priority: 27.06.2024 JP 2024103988
(71) Applicant: TOYOTA JIDOSHA KABUSHIKI KAISHA, Toyota-shi, Aichi-ken 471-8571 (JP)
(72) Inventor: YAMAZAKI, Masayuki, Toyota-shi, Aichi-ken,, 471-8571 (JP)
(74) Representative: Winter, Brandl - Partnerschaft mbB

(57) **Abstract**

A door control device (10) includes one or more processors (11). The one or more processors (11) are configured to: in a door (6) provided in an opening (7), execute opening and closing control of the door (6) based on imaging data of a predetermined imaging range in an external region of the opening (7); analyze the imaging data in chronological order; from a predetermined region of the imaging data, extract one or more moving objects (R) that move toward the opening (7); before at least one of the extracted moving objects (R) reaches the opening (7), determine whether each of the at least one extracted moving objects (R) reaches the opening (7) by a predetermined timing; and execute a closing action of the door (6) when it is determined that there is no moving object (R) that reaches the opening (7) by the predetermined timing.

## Description

### BACKGROUND OF THE INVENTION

### 1. Field of the Invention

The present invention relates to a door control device that automatically controls opening and closing of a door and to a storage medium.

### 2. Description of Related Art

A door control device that controls opening and closing of a door of an elevator based on an action of a user imaged in a captured image is known (e.g., see Japanese Unexamined Patent Application Publication No. 2017-124899 (JP 2017-124899 A)). This door control device is configured to analyze imaging data in chronological order, infer whether the user has an intention of boarding based on a chronological change in the position of the user in the image and the speed of movement of the user in the direction of the door, and control opening and closing actions of the door based on the inference result. According to the door control device described in JP 2017-124899 A, it is determined that the user has an intention of boarding when the user has moved in the direction of the door at a moving speed equal to or higher than a threshold value.

### SUMMARY OF THE INVENTION

According to the door control device described in JP 2017-124899 A, when it is determined that the user has an intention of boarding while a closing action of the door is being performed, control is executed to stop the closing action of the door and maintain an open state. Thus, when applied to a mobile body, this door control device may incur an unnecessary delay in its operation. Further, according to this door control device, when it is determined that the user has an intention of boarding and an allowable time that has been set beforehand has elapsed, the closing action of the door is forcibly performed. Thus, a person who has an intention of boarding may not be able to bord the vehicle.

The present invention provides a door control device that can suppress a delay while executing opening and closing control based on an action of a user, and also provides a storage medium.

A door control device according to a first aspect of the present invention includes one or more processors. The one or more processors are configured to control opening and closing of a door provided in an opening based on imaging data of a predetermined imaging range in an external region of the opening. The one or more processors are configured to: analyze the imaging data in chronological order; from a predetermined region of the imaging data, extract one or more moving objects that move toward the opening; before at least one of the extracted moving objects reaches the opening, determine whether each of the extracted moving objects will reach the opening by a predetermined timing; and execute a closing action of the door when it is determined that there is no moving object that will reach the opening by the predetermined timing.

The present invention can suppress a delay while executing opening and closing control based on an action of a user.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a block diagram showing the configuration of a door control device according to an embodiment;
FIG. 2 is a view for describing an imaging range of an external camera;
FIG. 3 is a view showing a plurality of blocks set in a predetermined region included in the imaging range;
FIG. 4 is a view showing a calculation method of a movement vector and a scalar component;
FIG. 5 is a view showing actual positional relationships between moving objects and reference positions;
FIG. 6 is a view showing positional relationships between the moving objects and the reference positions in a captured image;
FIG. 7 is a view showing a correction method of the scalar component;
FIG. 8 is a view showing a map of correction factors of the scalar component;
FIG. 9 is a view showing a threshold value map; and
FIG. 10 is a flowchart showing a flow of a process of a door control method that is executed in the door control device.

### DETAILED DESCRIPTION OF EMBODIMENTS

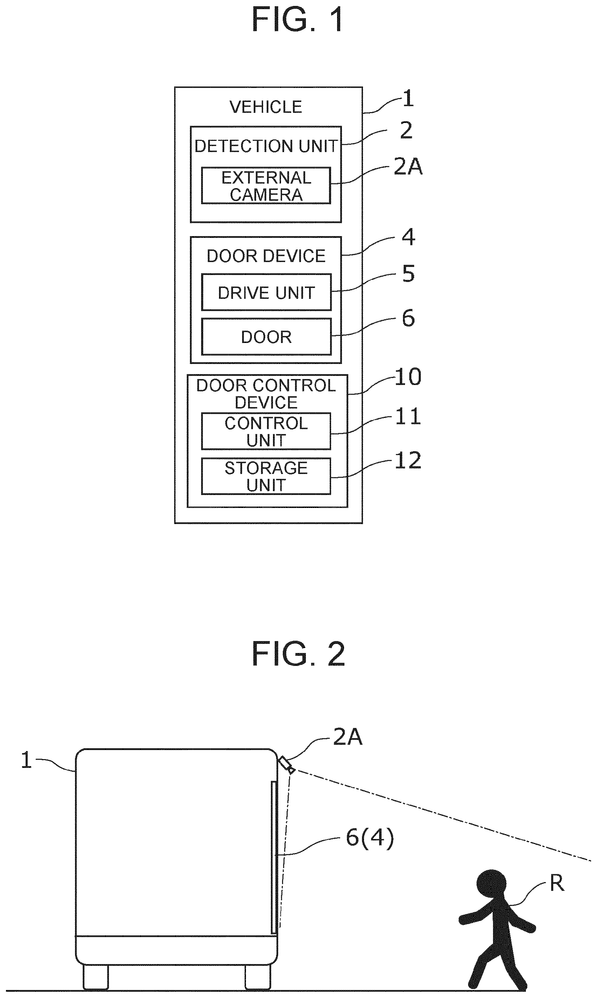

As shown in FIG. 1 and FIG. 2, a vehicle 1 includes a door device 4 that can be automatically opened and closed. The vehicle 1 includes a door control device 10 that controls the door device 4. The vehicle 1 includes a detection unit 2 that detects detection values for controlling the door device 4. The vehicle 1 is, for example, a bus vehicle that transports users. The vehicle 1 may be a self-driving vehicle or may be a manually driven vehicle. The detection unit 2, the door device 4, and the door control device 10 constitute a door system.

The detection unit 2 is formed by, for example, an external camera 2A that generates imaging data captured of an outside of the vehicle. The external camera 2A outputs the imaging data to the door control device 10. The external camera 2A captures a plurality of frame images based on a predetermined frame rate (e.g., 30 fps) in a unit time and generates the imaging data that is a moving image. The external camera 2A outputs the imaging data to the door control device 10. As long as the detection unit 2 can detect an environment outside the vehicle 1, the detection unit 2 may be formed by not only the external camera 2A but also a lidar device or a radar device.

The external camera 2A has, for example, a wide-angle lens and images the outside of the vehicle 1. The external camera 2A images a predetermined range from a region adjacent to the door device 4 outside the vehicle 1. The external camera 2A is provided, for example, outside the vehicle 1, at a position away from the door device 4 from where the predetermined range can be imaged.

The door device 4 includes, for example, an openable and closable door 6. The door 6 opens and closes based on, for example, a sliding-type opening and closing mechanism. The door 6 may open and close based on an opening and closing mechanism of a folding door or a hinged door. The door 6 is driven to open and close by a drive unit 5. The drive unit 5 is an actuator having a mechanism that opens and closes the door 6. The drive unit 5 is controlled by the door control device 10. The drive unit 5 is configured to open and close the door 6 by, for example, sliding it. The drive unit 5 may be configured to open and close the door 6 in a manner of an opening door or a hinged door. As long as the drive unit 5 can drive the door 6 to open and close, the drive unit 5 may be formed using any mechanism.

The door control device 10 includes a control unit 11 that controls opening and closing of the door 6 based on a detection value detected by the detection unit 2. The control unit 11 is formed by at least one hardware processor, such as a central processing unit (CPU). The door control device 10 includes a storage unit 12 that stores data and programs. The storage unit 12 is formed by a non-transitory storage medium, such as a hard disc drive (HDD) or a solid-state disc (SSD). In the storage unit 12, computer programs and data required for controlling opening and closing of the door 6 are stored.

The control unit 11 is configured to be able to recognize image data using, for example, artificial intelligence (AI). The control unit 11 is configured to be able to recognize the contents of image data by, for example, executing beforehand machine learning based on deep learning, optical flow, etc. using image data as teacher data. The control unit 11 is configured to be able to recognize an environment near the door 6 and users present near the door 6 based on imaging data captured by the detection unit 2. The control unit 11 is configured to control opening and closing of the door 6 upon recognizing approach of a user to the door 6.

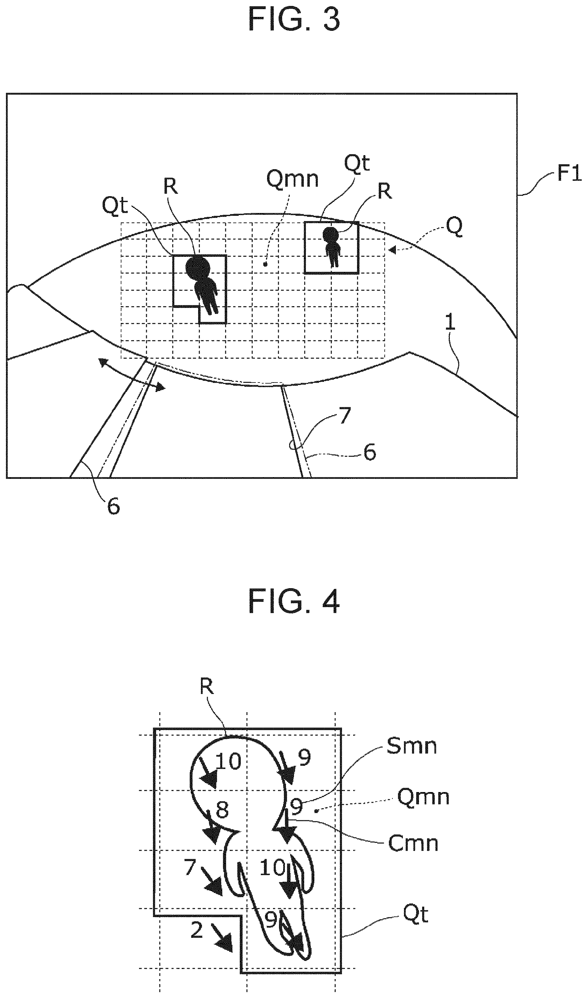

FIG. 3 shows a frame image F1 included in the imaging data captured by the external camera 2A. The imaging data is moving image data including a plurality of frame images within a predetermined unit time based on the predetermined frame rate. The frame image F1 includes a predetermined imaging range outside the vehicle 1. In the frame image F1, for example, the opening 7 and the door 6 provided in the opening 7, and the environment outside the vehicle 1 including the door 6 are imaged. The frame image F1 is, for example, image data captured of a wide-angle imaging range.

The frame image F1 includes a predetermined imaging range of an external region with respect to the opening 7. In the shown example, a position farther on an upper side in the frame image F1 is farther away from the door 6, and a position farther in the direction of the door 6 in the frame image F1 is closer to the door 6.

The control unit 11 executes opening and closing control of the door 6 based on the imaging data. The control unit 11 analyzes the frame images F1 included in the imaging data in chronological order. The control unit 11 sets a rectangular predetermined region Q in the imaging range of the frame image F1. The predetermined region Q is not limited to a rectangular shape and may have another shape. The control unit 11 divides the predetermined region Q into a plurality of blocks Qmn (m and n are natural numbers corresponding to coordinates) of image components that are arranged in a matrix form.

From the predetermined region Q included in the imaging range, the control unit 11 extracts one or more moving objects R that move toward the opening 7. The moving objects R are mainly users who are going to board the vehicle 1. A process of extracting the moving objects R by the control unit 11 is as follows.

As shown in FIG. 4, for example, the control unit 11 compares a frame image F1 at time t and a frame image F1 at time t + Δt, and calculates a movement vector Cmn of an image component that moves in chronological order in each block Qmn. The control unit 11 executes dense optical flow estimation by, for example, calculating movement loci of coordinates corresponding to all pixels in each block Qmn. The control unit 11 calculates the movement vector Cmn in each block Qmn by averaging the movement loci of the coordinates of all the pixels.

The control unit 11 converts movement vectors in the direction toward the door 6 (opening 7) among the calculated movement vectors Cmn into scalar components Smn. The control unit 11 compares the scalar component Smn of each block Qmn and a threshold value. The control unit 11 extracts, as a dynamic block, a scalar component Smn equal to or larger than the threshold value. In the shown example, the threshold value is set to 7. The control unit 11 groups blocks Qmn adjacent to one another of which the scalar components are equal to or larger than the threshold value to generate an aggregate Qt. The control unit 11 recognizes the aggregate Qt as a moving object R. The control unit 11 determines isolated blocks Qmn among the blocks Qmn of which the scalar components have been calculated as dynamic noise and remove this noise.

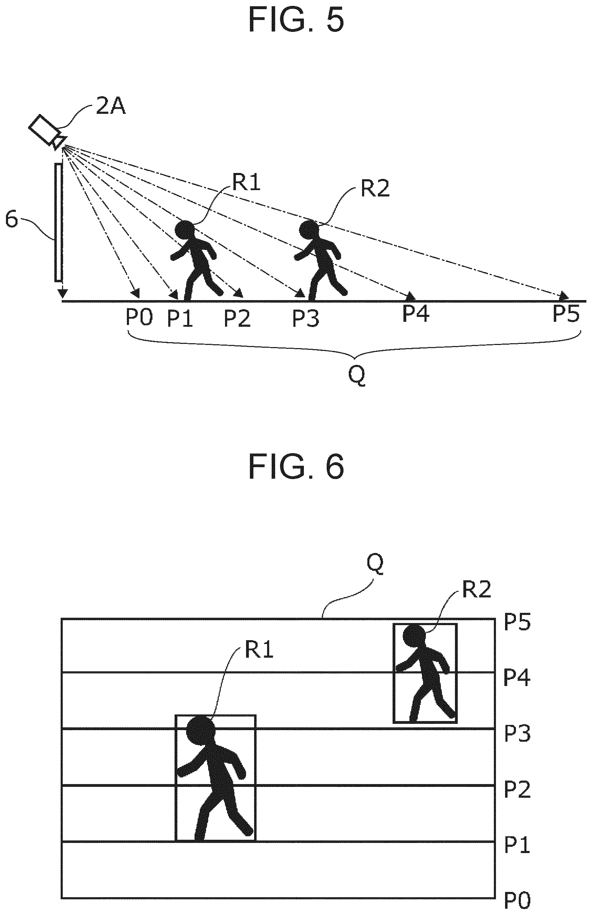

FIG. 5 shows, in a side view, relationships between actual positions of moving objects R and the predetermined region Q included in the frame image F1 captured by the external camera 2A. In the predetermined region Q, a plurality of reference positions P0 to P5 is set. The reference positions P0 to P5 are set such that the subscript increases from a side closer to the door 6 toward a side farther away from the door 6. The number of the reference positions P0 to P5 is one example and may be increased or decreased. Each of the reference positions P0 to P5 is set so as to correspond to an actual distance from the door 6.

FIG. 6 shows relationships between the predetermined region Q and the reference positions P0 to P5 in the frame image F1. In the frame image F1, for example, a lower limit position (e.g., the position of the toe of the foot) of a moving object R1 is present at the reference position P1. The lower limit position of the moving object R1 is handled as one of relative positions that are closest to the door 6 (see FIG. 5). In the frame image F1, for example, a lower limit position (e.g., the position of the toe of the foot) of a moving object R2 is present at the reference position P3. The lower limit position of the moving object R2 is handled as one of relative positions that are closest to the door 6 (see FIG. 5). The control unit 11 calculates the position of the moving object based on positional relationships between the lower limit position of the moving object R2 and the reference positions P0 to P5 in the frame image F1.

In the frame image F1, the moving object R1 at a position closer to the door 6 is represented larger than the moving object R2 that is at a position farther away from the door 6 than the moving object R1 is. The scalar component Smn (see FIG. 4) of the block Qmn calculated by the control unit 11 becomes apparently smaller with increasing distance from the door 6 in the predetermined region Q of the frame image F 1. Therefore, the control unit 11 corrects the scalar component Smn of the block Qmn in the predetermined region Q so as to increase with increasing distance from the door 6.

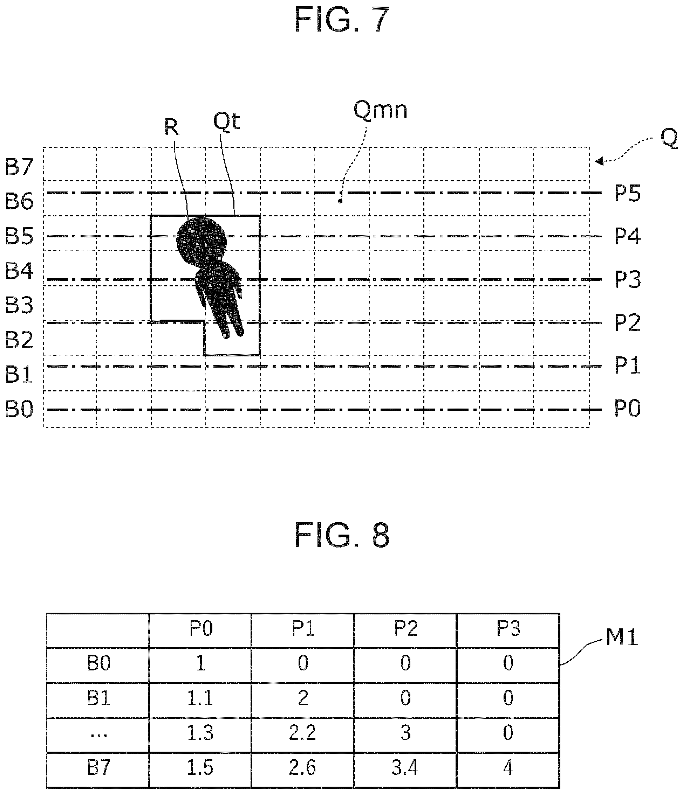

FIG. 7 shows line numbers that are set for the blocks Qmn in line units and the reference positions P0 to P5 in the predetermined region Q. The subscripts of line numbers B0 to B7 are set so as to increase with increasing distance from the door 6. The number of the line numbers is one example and may be changed as appropriate according to the number of the blocks Qmn set in the predetermined region Q.

FIG. 8 shows a map M1 of correction factors that are applied to the reference positions P0 to P5 for the lower limit position of the aggregate Qt and the scalar components Smn of the respective blocks Qmn included in the aggregate Qt. When one of the reference positions P0 to P5 corresponding to the lower limit position of the aggregate Qt is determined, the scalar components Smn of the respective blocks Qmn included in the aggregate Qt are multiplied by the correction factor at that reference position in the map M1. The correction factor is set so as to be larger when one of the reference positions P0 to P5 corresponding to the lower limit position of the aggregate Qt is farther away from the door 6, as well as be larger when the blocks Qmn are farther away from the door 6.

In the example of FIG. 7, the lower limit position of the aggregate Qt is the reference position P1, and, based on the map M1, the scalar component Smn of the lowest block Qmn in the aggregate Qt is multiplied by the correction factor of the line number B2 for the reference position P1, and the scalar component Smn of an uppermost block Qmn in the aggregate Qt is multiplied by the correction factor of the line number B5 for the reference position P1.

Based on the map M1, the control unit 11 calculates corrected scalar components obtained by correcting the scalar components according to a relationship between the positions of the blocks Qmn included in the aggregate Qt and the lower limit position of the aggregate Qt. The control unit 11 integrates the corrected scalar components included in the aggregate Qt to calculate a movement amount evaluation parameter for evaluating a movement amount of the moving object R.

In the frame image, since the moving object R1 at the position closer to the door 6 is represented larger than the moving object R2 at the position farther away from the door 6, the number of the blocks Qmn included in the moving object R (i.e., the aggregate Qt) at the position closer to the door 6 is larger than that of the moving object R2 at the position farther away from the door 6. Since the movement amount evaluation parameter is obtained by integrating the corrected scalar components of the respective blocks Qmn included in the moving object R (i.e., the aggregate Qt), when it is assumed that the corrected scalar components of the respective blocks Qmn are the same, the movement amount evaluation parameter for a moving object R at a position closer to the door 6 (i.e., with a larger number of blocks Qmn included in the aggregate Qt) is larger. The movement amount evaluation parameter is an evaluation parameter equivalent to a movement amount to which a weight according to the position of the moving object R has been assigned.

Further, the movement amount evaluation parameter is an evaluation parameter reflecting a movement amount to which a weight according to the position of the moving object R between frame images at different imaging timings (i.e., during a time lag between the imaging timings) has been assigned. Thus, the movement amount evaluation parameter can be considered as equivalent to a moving speed to which a weight according to the position of the moving object R has been assigned.

When the control unit 11 recognizes one or more moving objects R, the control unit 11 executes the following process on each moving object R. Based on the position and the movement amount evaluation parameter of the moving object R, the control unit 11 determines, before the moving object R reaches the opening 7, whether the moving object R will meet a predetermined timing that has been set beforehand. In other words, based on the position and the movement amount evaluation parameter of the moving object R, the control unit 11 determines, before the moving object R reaches the opening 7, whether the moving object R will reach the opening 7 by a predetermined timing. The predetermined timing is, for example, time of day at which a closing action of the door is started. The predetermined timing is set according to, for example, departure time of the vehicle 1. The control unit 11 starts the closing action of the door 6 at the predetermined timing that is a predetermined time (e.g., a few seconds) before the departure time, and ends the closing action of the door 6 at a point when the predetermined time has elapsed to put the door 6 in a closed state. The predetermined time may be adjusted as appropriate according to an environment where the vehicle 1 is present.

When the control unit 11 determines that there is no moving object R that will meet the predetermined timing based on the analysis result of the frame image F1, the control unit 11 executes the closing action of the door 6 at the predetermined timing. In other words, when the control unit 11 determines that there is no moving object R that will reach the opening 7 by the predetermined timing based on the analysis result of the frame image F1, the control unit 11 executes the closing action of the door 6 at the predetermined timing. When the control unit 11 determines that there is a moving object R that will meet the predetermined timing based on the analysis result of the frame image F1, the control unit 11 does not execute the closing action of the door 6. The control unit 11 determines whether there is a moving object R that will meet the predetermined timing based on a result of comparison between the movement amount evaluation parameter and the threshold value. The control unit 11 determines whether the moving object R will meet the predetermined timing by, for example, determining whether the movement amount evaluation parameter is equal to or larger than the threshold value. The method of comparing with the threshold value is one example, and another comparison method may be used as long as that method can determine whether a moving object R will meet the predetermined timing.

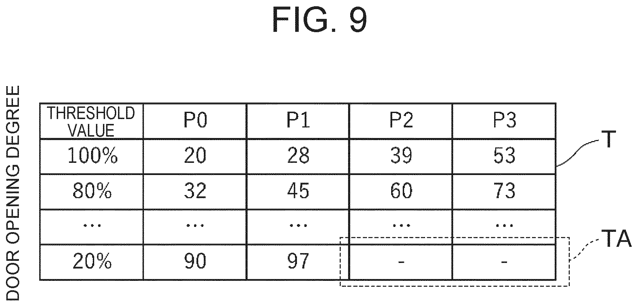

FIG. 9 shows a threshold value map T that is set for the threshold value. The threshold value is used to determine the possibility of contact between the door 6 and the moving object R. The threshold value is set based on, for example, relationships among the moving speed of the moving object R, the reference position of the moving object R, and an opening degree of the door 6. The threshold value is set such that, for example, at the same reference position, the threshold value becomes lower as the opening degree of the door 6 becomes higher and becomes higher as the opening degree of the door 6 becomes lower.

The threshold value is set such that, for example, at the same opening degree of the door 6, the threshold value becomes higher as the reference position becomes farther away from the door 6. For example, a first threshold value is set so as to become lower as the opening degree of the door 6 becomes higher and the reference position of the moving object R becomes closer to the door 6, and the threshold value is set so as to become higher as the opening degree of the door 6 becomes lower and the reference position of the moving object R becomes farther away from the door 6. A region TA where the threshold value exceeds 100 is used to determine that the moving object R will not meet the predetermined timing. When the movement amount evaluation parameter is equal to or larger than the threshold value based on a first determination result, the control unit 11 determines that there is a high possibility that the door 6 and the moving object R will come into contact with each other, and stops the closing action of the door 6 and executes an opening action.

The control unit 11 puts the door 6 in an open state and allows the moving object R (user) to pass through the opening 7. The control unit 11 determines that the moving object R will meet the predetermined timing, and stops the execution of the closing action of the door 6 during a stopping time according to the position of the moving object R, and maintains the state of the door 6 until the predetermined timing. In this case, based on a voice, an image, etc. from a notification unit (not shown) provided in the vehicle 1, the control unit 11 may output a predetermined content of notification for notifying a driver or passengers of the vehicle 1 that the vehicle 1 will be kept on standby. When the control unit 11 determines that the opening degree of the door 6 is so low that merely stopping the opening action of the door 6 cannot prevent contact between the moving object R and the door 6 or cannot allow the moving object R to easily pass through the opening 7, the control unit 11 may stop the closing action of the door 6 and execute the opening action.

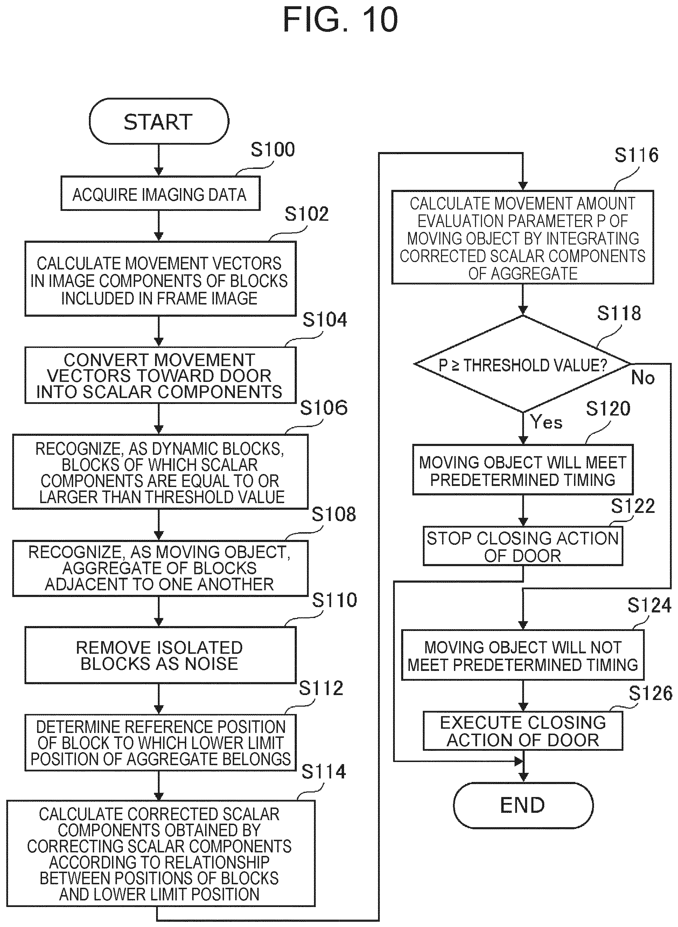

FIG. 10 shows a flow of a process of a door control method that is executed in the door control device 10. The door control method is executed based on a computer program that is installed in a computer provided in the door control device 10. The computer program causes the door control device 10 to execute the following process.

The control unit 11 acquires imaging data that the external camera 2A has captured of the predetermined imaging range in the outside region with respect to the opening (step S100). The control unit 11 divides the predetermined region included in the frame image F1 into image components in the unit of a plurality of blocks Qmn, and calculates the movement vectors Cmn of image components that move in the blocks Qmn (step S102). The control unit 11 converts the movement vectors Cmn in the direction toward the door 6 into scalar components (step S104). The control unit 11 recognizes, as dynamic blocks, blocks of which the scalar components are equal to or larger than the threshold value (step S106).

The control unit 11 recognizes, as a moving object R, an aggregate of dynamic blocks that are adjacent to one another (step S108). The control unit 11 removes isolated blocks of which the scalar components are equal to or larger than the threshold value as noise (step S110). The control unit 11 determines the reference position of a block to which the lower limit position of the aggregate belongs (the position closest to the door 6 (step S112). The control unit 11 calculates the corrected scalar components that are obtained by correcting the scalar components according to a relationship between the positions of the blocks included in the aggregate and the lower limit position of the aggregate (step S114). The control unit 11 integrates the corrected scalar components included in the aggregate to calculate a movement amount evaluation parameter P of the moving object R (step S116).

Based on the result of comparison between the movement amount evaluation parameter P and the threshold value, the control unit 11 determines whether the moving object R will meet the predetermined timing (step S118). Determining whether the moving object R meets the predetermined timing means determining whether the moving object R reaches the opening by the predetermined timing. When the movement amount evaluation parameter P is equal to or larger than the threshold value, the control unit 11 determines that the moving object R will meet the predetermined timing (step S120). The control unit 11 stops or does not execute the closing action of the door 6 (step S122). When the movement amount evaluation parameter P is smaller than the threshold value, the control unit 11 determines that the moving object R will not meet the predetermined timing (step S124). The control unit 11 executes the closing action of the door 6 and puts the door 6 in the closed state (step S126).

As has been described above, the door control device 10 can prevent a delay of the vehicle 1 while executing the opening and closing control based on actions of users imaged in imaging data. The door control device 10 can prevent continuously waiting for users who will not meet the predetermined timing of executing closing control of the door 6 that has been set based on time of day at which the vehicle 1 departs, and thus can reduce the likelihood of a delay in the timing of departure of the vehicle 1. The door control device 10 can reduce the likelihood that, despite there being users who will meet the predetermined timing, the door 6 is put in the closed state such that the users cannot board the vehicle. The door control device 10 can appropriately determine whether a moving object R will meet the predetermined timing according to the position of the moving object R by correcting, on a block-by-block basis, an error due to a difference in distance among moving objects R at positions in the frame image F1 and then evaluating a movement amount to which a weight according to the position of the moving object R has been assigned.

In the above-described embodiment, the computer program that is executed in each component of the door control device 10 may be provided in the form of being recorded in a computer-readable portable non-transitory recording medium, such as a semiconductor memory, a magnetic recording medium, or an optical recording medium. The present invention is not limited to the above-described one embodiment and can be changed as appropriate within such a range that no departure is made from the gist of the invention. For example, the door control device 10 may be applied to control of a door not only in the vehicle 1 but also in others than the vehicle 1.

## Claims

1. A door control device (10) comprising one or more processors (11) configured to:
control opening and closing of a door (6) provided in an opening (7) based on imaging data of a predetermined imaging range in an external region of the opening (7);
analyze the imaging data in chronological order;
from a predetermined region of the imaging data, extract one or more moving objects (R) that move toward the opening (7);
before at least one of the extracted moving objects (R) reaches the opening (7), determine whether each of the extracted moving objects (R) reaches the opening (7) by a predetermined timing; and
execute a closing action of the door (6) when it is determined that there is no moving object (R) that reaches the opening (7) by the predetermined timing.

2. The door control device (10) according to claim 1, wherein the one or more processors (11) are configured not to execute the closing action of the door (6) when it is determined that there is a moving object (R) that reaches the opening (7) by the predetermined timing.

3. The door control device (10) according to claim 1, wherein the one or more processors (11) are configured to:
divide the predetermined region of the imaging data into a plurality of blocks of image components;
calculate movement vectors of the image components that move in the blocks;
convert the movement vectors in a direction toward the door (6) into scalar components;
determine an aggregate of a plurality of the blocks of which the scalar components are equal to or larger than a threshold value as the moving object (R), a plurality of the blocks being adjacent to one another;
calculate corrected scalar components by correcting the scalar components, based on positions of the blocks included in the aggregate and a lower limit position of the aggregate;
calculate a movement amount evaluation parameter of the moving object by summing the corrected scalar components of the blocks in the aggregate; and
based on a result of determining whether the movement amount evaluation parameter is equal to or larger than a threshold value, determine whether the moving object (R) reaches the opening (7) by the predetermined timing at which the closing action of the door (6) is started.

4. A non-transitory storage medium storing instructions that are executable by one or more processors (11) installed in a door control device (10) and that cause the one or more processors (11) to perform functions comprising:
in a door (6) provided in an opening (7), executing opening and closing control of the door (6) based on imaging data of a predetermined imaging range in an external region of the opening (7);
analyzing the imaging data in chronological order;
from a predetermined region of the imaging data, extracting one or more moving objects (R) that move toward the opening (7);
before at least one of the extracted moving objects (R) reaches the opening (7), determining whether each of the extracted moving objects (R) reaches the opening (7) by a predetermined timing; and
executing a closing action of the door (6) when it is determined that there is no moving object (R) that reaches the opening (7) by the predetermined timing.

5. The door control device (10) according to claim 1 or 2, wherein the predetermined timing is a point of time at which the closing action of the door (6) is started.
